# EUROPEAN PATENT APPLICATION

(11) **EP 3 081 407 A1**
(43) Date of publication of application: **19.10.2016**
(21) Application number: 16165623.6
(22) Date of filing: 15.04.2016
(51) Int. Cl.: B60G 9/00, B60G 11/04, B60G 11/10, B60G 11/12, B60G 9/02

(54) **A LEAF SPRING SUSPENSION SYSTEM COMPRISING A WASHER**

(30) Priority: 16.04.2015 TR 201504705
(71) Applicant: Sampa Otomotiv Sanayi Ve Ticaret Anonim Sirketi, 55300 Samsun (TR)
(72) Inventor: ALBAYRAK, ISMAIL UTKU, ISTANBUL (TR)
(74) Representative: Dericioglu Kurt, Ekin

(57) **Abstract**

The present invention relates to a leaf spring suspension system (1) comprising at least one leaf spring (3) connected to the chassis (2) in vehicles; at least one spring eye (4) that is formed by bending the end of the at least one leaf spring (3); at least one connection member (5) that is placed into the spring eye (4); at least one shackle (7) that allows the leaf spring (3) to stretch to absorb the vibrations originating from the road conditions, that provides movable connection and that is disposed between the spring eye (4) and the chassis (2), and at least one bushing (6) that is placed into the spring eye (4) and that enables the leaf spring (3) to be connected to the shackle (7).

## Description

The present invention relates to a leaf spring suspension system comprising a washer.

The leaf spring suspension is a suspension component that absorbs the energy generated by the loads acting on the chassis and the other transmission elements of the vehicle due to road conditions, thus providing driving comfort and safety. In the leaf spring suspension, leaf springs absorb vibrations. The leaf springs are connected to the chassis by means of leaf spring bushings. During the absorbing process, the leaf springs stretch and oscillate. Due to this movement, a tension occurs on the leaf spring bushings. This tension usually causes the rubber leaf spring bushings aging and decreases the lifetime of the component.

In the state of the art European Patent Document No. EP1368572, a rubber bushing is disclosed, that is used in leaf spring suspension systems and that prevents the transmission of the tension generated due to the movement of the leaf springs. In order to prevent the transmission of the tension, the bushing is composed of layers produced from rubber outside and hard materials inside. The inner bushing freely moves in the outer bushing. Since this movement occurs in the eye of the spring, it causes friction. However, under high loads, the free movement is prevented. Therefore, due to friction the bushing heats up and the rubber aging occurs. Moreover, since the free movement is prevented under high loads, tension acts on the outer rubber layer.

The state of the art German Patent Document No. DE10357079 discloses a rubber bushing that is used in leaf spring suspension systems and that is disposed on the eye of the spring, and a washer that creates a space between the shackle and the eye of the spring. The said washer prevents the wear in the horizontal direction by creating a space between the eye of the spring and the shackle and can be used with spring eyes in different diameters thanks to the rubber parts thereon.

The aim of the present invention is the realization of a leaf spring suspension system with reduced maintenance costs, which absorbs the tension acting on the bushing by means of a washer.

The leaf spring suspension system realized in order to attain the aim of the present invention, explicated in the first claim and the respective claims thereof, comprises at least one leaf spring; at least one spring eye that is formed by bending the end of the at least one leaf spring; at least one bushing that is placed into the spring eye by fitting tightly and that enables the leaf spring to be connected to the vehicle chassis by means of a connection member passing there through, and at least one shackle that allows the movement of the leaf spring during absorption, that provides free connection, that is disposed between the spring eye and the vehicle chassis, with one end connected to the vehicle chassis and the other end to the spring eye.

The leaf spring suspension system of the present invention comprises at least one washer with one side produced from a material different from the material of the other side, that is disposed between the shackle and the bushing and that prevents the tension generated due to the stretching of the leaf spring from being transmitted to the bushing. The washer is preferably produced from a composite material.

By means of the washer with two sides produced from different materials, one side of the washer holds onto the shackle while the other side thereof slides over the bushing. Thus, the tension generated due to the stretching of the leaf spring is absorbed and the transmission of the force creating the tension is decreased. Moreover, the washer being separated from the bushing allows the replacement of the deformed washer independently of the bushing. Thus, part replacement costs decrease.

In an embodiment of the present invention, the bushing has at least one inner part that contacts the connection member and at least one outer part that contacts the spring eye, and the horizontal cross-section of the bushing in the assembled state is L shaped. The inner and outer parts have almost complete matching forms. The short edge of the shape with L cross-section creates the surface that contacts the washer while the long edge thereof is placed into the spring eye by tight fitting.

In an embodiment of the present invention, the bushing has the inner part produced from a rigid material and the outer part produced from a flexible material, which is joined with the inner part during production so as not to be separated therefrom without being deformed. Thus, the bushing gains strength against the loads acting thereon and absorbs the vibrations.

In an embodiment of the present invention, the bushing comprises at least one integrated flange that surrounds the end thereof facing the washer, the outer diameter of the flange being greater than the inner diameter of the spring eye. By means of the flange, the surface sliding over the washer is obtained. Moreover, when the washer is deformed in the leaf spring suspension system, the flange enables the spring eye to be protected against horizontal loads and the wearing effects of the shackle.

In an embodiment of the present invention, the washer has at least one first surface that faces the bushing and that is produced from a rigid material, and at least one second surface that faces the shackle and that is produced from a flexible material. The fact that the two surfaces of the washer are produced from different materials allows one surface to hang onto the shackle while the other surface slides over the flange. Thus, the tension generated due to the stretching of the leaf spring is prevented from being transmitted onto the bushing.

In an embodiment of the present invention, the leaf spring suspension system comprises the first surface of the washer that is produced from the same material as the inner part of the bushing. The inner part of the bushing with L cross-section forms the side of the flange, composed of the short edge of the cross-section, which faces the washer. The first surface of the washer faces the bushing. The said surfaces produced from the same material or with the same rigidity easily slide over each other without abrading each other. Thus, the abrasion is minimized.

In an embodiment of the present invention, the leaf spring suspension system comprises at least one protrusion extending from the inner part towards the washer and at least one recess that is arranged on the first surface facing the flange and wherein the protrusion is seated. The protrusion and the recess have matching shapes. Thus, the flange and the washer are enabled to be concentric.

By means of the leaf spring suspension system of the present invention, the tension acting on the bushing is enabled to be reduced by means of a washer, thus enabling the lifetime of the bushing to be increased.

The leaf spring suspension system realized in order to attain the aim of the present invention is illustrated in the attached figures, where:
Figure 1 - is the perspective view of the leaf spring suspension system.
Figure 2 - is the exploded view of detail B of the leaf spring suspension in Figure 1.
Figure 3 - shows a cross-section along the line A-A of the leaf spring suspension in Figure 1.
Figure 4 - is the view of detail X of the A-A cross-section in Figure 3.
Figure 5a - is the sideways view of the leaf spring and the shackle in the free state.
Figure 5b - is the sideways view of the leaf spring and the shackle under load.
Figure 6 - is the perspective view of the bushing and the washer.
Figure 7 - is the exploded view of the bushing.
Figure 8 - is the exploded view of the washer.
Figure 9 - is the cross-sectional view of the bushing and the washer.

The elements illustrated in the figures are numbered as follows:
1- Leaf spring suspension system
2- Chassis
3- Leaf spring
4- Spring eye
5- Connection member
6- Bushing
7- Shackle
8- Washer
9- Inner part
10- Outer part
11- Flange
12- First surface
13- Second surface
14- Recess
15- Protrusion

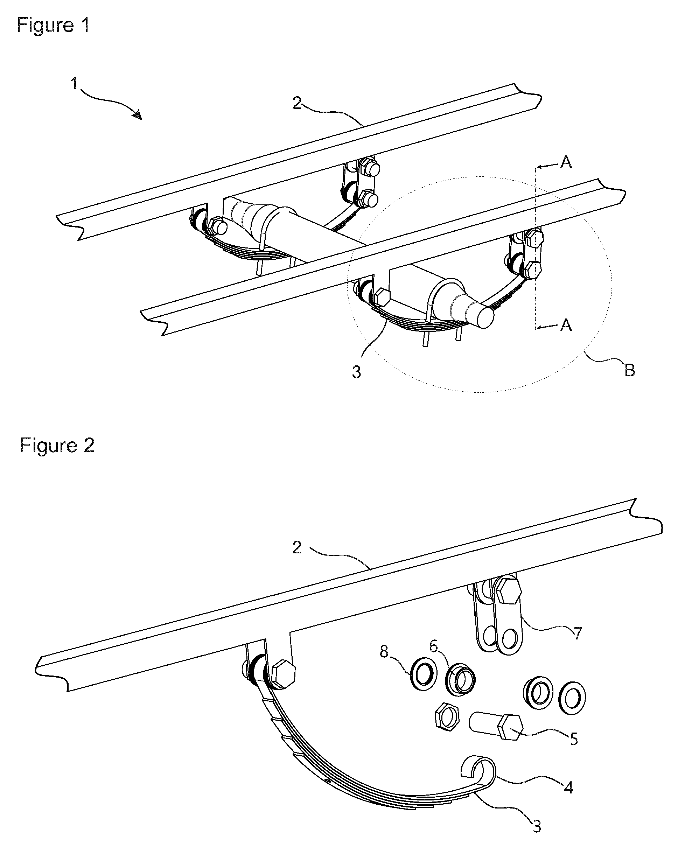

The leaf spring suspension system (1) comprises at least one leaf spring (3) connected to the chassis (2) in vehicles; at least one spring eye (4) that is formed by bending the end of the at least one leaf spring (3); at least one connection member (5) that is placed into the spring eye (4); at least one shackle (7) that allows the leaf spring (3) to stretch to absorb the vibrations originating from the road conditions, that provides movable connection and that is disposed between the spring eye (4) and the chassis (2), and at least one bushing (6) that is placed into the spring eye (4) and that enables the leaf spring (3) to be connected to the shackle (7) (Figure 1, Figure 2).

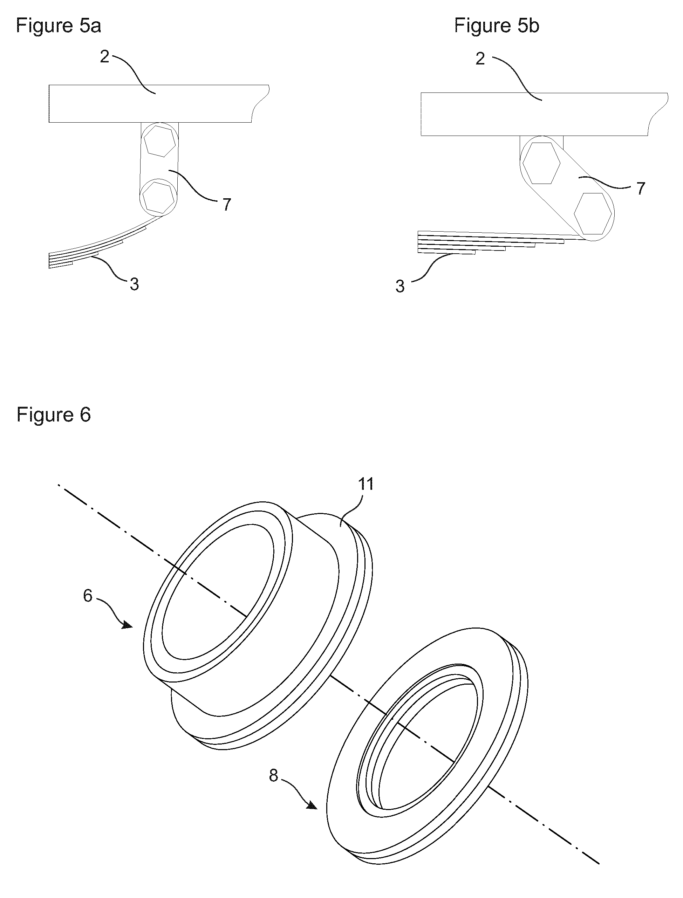

The leaf spring (3) is connected to the chassis (2) by the shackle (7), so that one end thereof is stationary and the other is movable. The shackle (7) allows the leaf spring (3) to oscillate while absorbing vibrations. The leaf spring (3) has a curved shape while there is no load acting thereon and the leaf spring (3) is flattens under load (Figure 5a, Figure 5b).

The leaf spring suspension system (1) of the present invention comprises at least one washer (8) with one side produced from a material different from the material of the other side, that is disposed between the shackle (7) and the bushing (6) and that prevents the tension generated due to the stretching of the leaf spring (3) from being transmitted to the bushing (6). By means of the washer (8), the bushing (6) does not directly contact the shackle (7). By means of the washer (8), the vibrations between the bushing (6) and the shackle (7) are absorbed. The washer (8) is deformed as a result of the vibrations originating from the operation of the vehicle and the washer (8) is replaced independently of the bushing (6). Thus, the lifetime of the bushing increases and the maintenance costs of the vehicle decrease.

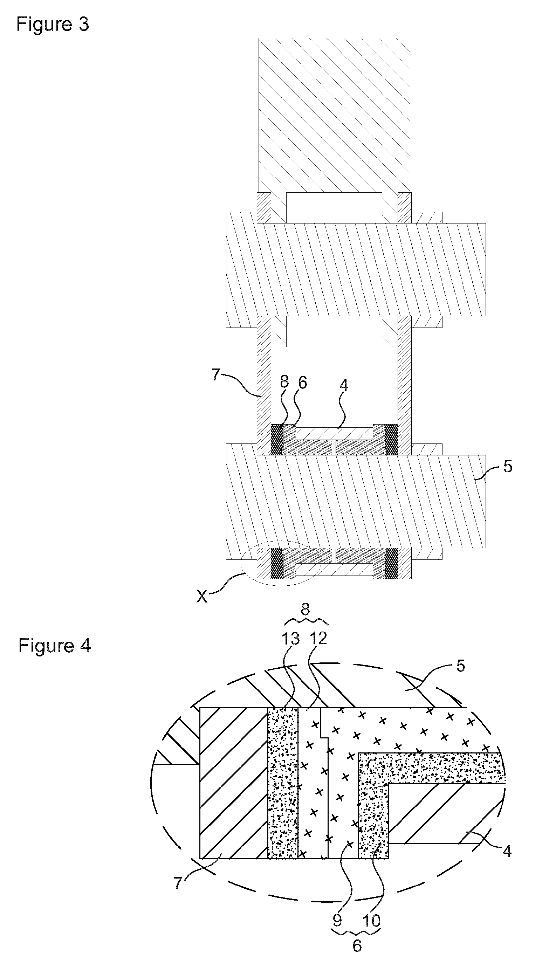

With one surface of the washer (8) being produced from a material different from the other surface, one surface thereof has a high friction coefficient and hangs onto the surface which contacts with, while the other surface has a low friction coefficient and slides over the surface which contacts with. Thus, while hanging onto the shackle (7) with one surface, the washer (8) moves freely over the bushing (6) with the other surface (Figure 3, Figure 4).

In an embodiment of the present invention, the bushing (6) has at least one inner part (9) that contacts the connection member (5) and at least one outer part (10) that contacts the spring eye (4). The cross-section of the bushing (6) is L shaped.

The bushing (6) being composed of two parts decreases the production costs. One part of the bushing (6) remains inside the spring eye (6) by means of the L-shape thereof. Thus, the bushing (6) absorbs the vibrations. Another part of the bushing (6) remains outside the spring eye (4) and contacts the washer (8). Thus, a contact area is obtained between the washer (8) and the bushing (6) (Figure 3, Figure 4).

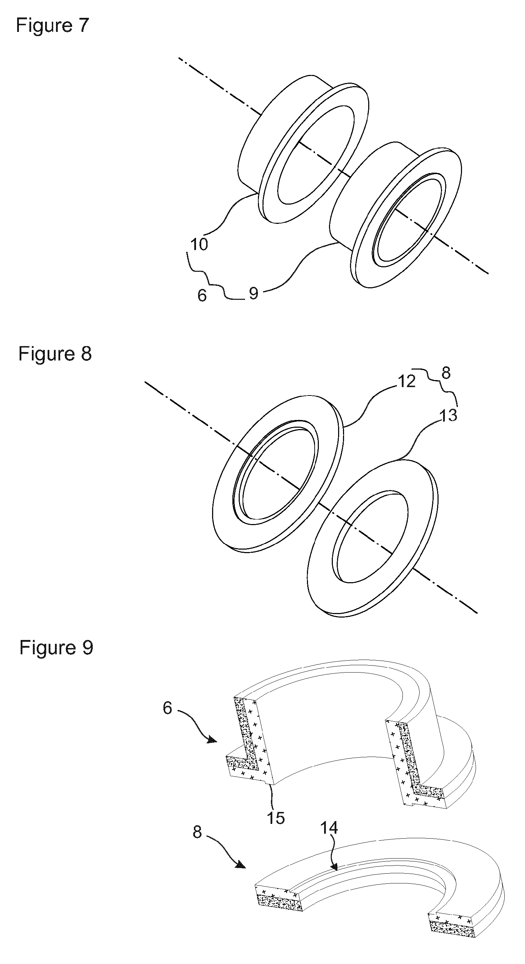

In an embodiment of the present invention, the bushing (6) has the inner part (9) produced from a rigid material and the outer part (10) produced from a flexible material, which is joined with the inner part (9) during production so as not to be separated therefrom without being deformed (Figure 7). The inner part (9) of the bushing (6) being produced from a rigid material enables the latter to be resistant against high loads. The outer part (10) being produced from a flexible material enables both the horizontal and the vertical loads acting on the bushing (6) to be absorbed (Figure 4). The inner part (9) is preferably produced from a glass-fiber-reinforced plastic material. The outer part (10) is produced from rubber.

In an embodiment of the present invention, the bushing (6) comprises at least one annular flange (11) that surrounds the end thereof facing the washer (8), the outer diameter of the flange (11) being greater than the inner diameter of the spring eye (4) (Figure 6). By means of the flange (11), the vibrations and forces generated during the operation of the vehicle are prevented from directly acting on the spring eye (4). Moreover, the flange (11) serves as a stopper during the assembly and enables the bushing (6) to be properly mounted to the spring eye (4).

In an embodiment of the present invention, the washer (8) has at least one first surface (12) that faces the bushing (6) and that is produced from a rigid material, and at least one second surface (13) that faces the shackle (7) and that is produced from a flexible material (Figure 4, Figure 8). While the first surface (12) provides resistance for the washer (8), the second surface (13) absorbs lateral loads. Moreover, the first surface (12) contacts the bushing (6), thus a sliding surface between the flange (11) and the first surface (12) is obtained. The second surface (13) contacts the shackle (7) and by creating a friction surface, allows the washer (8) to firmly hang onto the shackle (7).

In an embodiment of the present invention, the first surface (12) is produced from the same material as the inner part (9). Thus, the lifetime of the bushing (6) increases and the wearing of the contacting surfaces of the washer (8) is minimized. The sliding movement occurs between the inner part (9) and the first surface (12) (Figure 4). Preferably the first surface (12) and the inner part (9) are produced from materials with the same or close rigidity.

In an embodiment of the present invention, the leaf spring suspension system (1) comprises the inner part (9) having at least one protrusion (15) extending from the inner part (9) towards the washer (8) and the first surface (12) having at least one recess (14) that is arranged on the first surface (12) and wherein the protrusion (15) is seated (Figure 9). Thus, the bushing (6) and the washer (8) are rendered concentric and move together without any change in their positions.

By means of the present invention, a leaf spring suspension system (1) is realized, having a washer (8) that decreases the tension acting on the bushing (6), reducing the maintenance costs and increasing the lifetime.

## Claims

1. A leaf spring suspension system (1) comprising
- at least one leaf spring (3) connected to the chassis (2) in vehicles,
- at least one spring eye (4) that is formed by bending the end of the at least one leaf spring (3),
- at least one connection member (5) that is placed into the spring eye (4),
- at least one shackle (7) that allows the leaf spring (3) to stretch to absorb the vibrations originating from the road conditions, that provides movable connection and that is disposed between the spring eye (4) and the chassis (2),
- at least one bushing (6) that is placed into the spring eye (4) and that enables the leaf spring (3) to be connected to the shackle (7)
**characterized by** at least one washer (8) with one side produced from a material different from the material of the other side, that is disposed between the shackle (7) and the bushing (6) and that prevents the tension generated due to the stretching of the leaf spring (3) from being transmitted to the bushing (6).

2. A leaf spring suspension system (1) as in Claim 1, **characterized by** the bushing (6) which has L shaped cross-section, that has at least one inner part (9) that contacts the connection member (5) and at least one outer part (10) that contacts the spring eye (4).

3. A leaf spring suspension system (1) as in Claim 2, **characterized by** the bushing (6) that has the inner part (9) produced from a rigid material and the outer part (10) produced from a flexible material, which is joined with the inner part (9) during production so as not to be separated therefrom without being deformed.

4. A leaf spring suspension system (1) as in any one of the claims 1 to 3, **characterized by** the bushing (6) that comprises at least one annular flange (11) that surrounds the end thereof facing the washer (8), the outer diameter of the flange (11) being greater than the inner diameter of the spring eye (4).

5. A leaf spring suspension system (1) as in any one of the claims 1 to 4, **characterized by** the washer (8) that has at least one first surface (12) that faces the bushing (6) and that is produced from a rigid material, and at least one second surface (13) that faces the shackle (7) and that is produced from a flexible material.

6. A leaf spring suspension system (1) as in Claim 5, **characterized by** the first surface (12) that is produced from the same material as the inner part (9).

7. A leaf spring suspension system (1) as in Claim 5 or 6, **characterized by** the inner part (9) having at least one protrusion (15) extending from the inner part (9) towards the washer (8) and the first surface (12) having at least one recess (14) that is arranged on the first surface (12) and wherein the protrusion (15) is seated.
